# EUROPÄISCHE PATENTSCHRIFT

(11) **EP 0 463 552 B1**
(45) Veröffentlichungstag und Bekanntmachung des Hinweises auf die Patenterteilung: **13.12.1995**
(21) Anmeldenummer: 91110027.9
(22) Anmeldetag: 19.06.1991
(51) Int. Cl.: H02G 7/14

(54) **Dämpfungsvorrichtung für eine Hochspannungsfreileitung**
Damping device for a high-tension overhead line
Dispositif d'amortisseur pour une ligne aérienne à haute tension

(30) Priorität: 23.06.1990 DE 4020027; 27.12.1990 DE 4041889
(43) Veröffentlichungstag der Anmeldung: 02.01.1992
(73) Patentinhaber: ABB PATENT GmbH, 68309 Mannheim (DE)
(72) Erfinder: Schwab, Adolf, Prof.Dr., D-7500 Karlruhe-Durlach (DE); Schlayer, Gernot, W-6800 Mannheim 24 (DE)
(74) Vertreter: Rupprecht, Klaus, Dipl.-Ing.

(56) Entgegenhaltungen:
- FR-A- 877 869
- US-A- 3 418 419

## Beschreibung

Die Erfindung bezieht sich auf eine Dämpfungsvorrichtung für eine Hochspannungsfreileitung gemäß dem Oberbegriff des Patentanspruchs 1.

Die Vorrichtung ist zum Dämpfen von Schwingungen auf Hochspannungsfreileitungsseilen vorgesehen. Es handelt sich hierbei um Schwingungen im Bereich von etwa 0,1- bis 3 Hz, die auch als Seiltanzen bezeichnet werden. Bei diesen Seilschwingungen, die zwar selten auftreten, kann es zu Seilberührungen oder Seilnäherungen kommen, was erhebliche Auswirkungen auf den Betrieb und die Betriebssicherheit der Leitungen hat. In vielen Fällen kommt es bei diesem Seiltanzen zu Kurzschlußlichtbögen zwischen den sich nähernden Phasen, was zu einem Abbrennen der leitenden Aluminiumdrähte führt. Darüberhinaus verursachen diese Schwingungen Schäden an den Isolatorketten und den Abspannmasten, die bis zur völligen Zerstörung des betroffenen Leitungsabschnittes führen können. Neuere Beobachtungen haben ergeben, daß Seilanzen nicht nur bei den durch Aneisung und Bildung eines Tragflügelprofils bekannten Bedingungen auftritt, sondern auch durch böenartige Winde und nachfolgend ausgelöste Kopplungen benachbarter Spannfelder entstehen kann. Um eine Übertragung solcher Schwingungen aus dem angeregten Spannfeld in die benachbarten Sapnnfelder zu verhindern wurde in der deutschen Patenmeldung P 39 24 885.2 vorgeschlagen, die Aufhängung und Abspannung der Leiterseile an den Masten völlig starr auszubilden. Da jedoch viele Freileitungsmaste selbst elastisch reagieren, führt diese Lösung nicht zu den gewünschten Effekten.

Aus der US-A-3 418 419 ist eine Dämpfungsvorrichtung für Freileitungen bekannt geworden, welche in verschiedenartiger Anordnung Dämpfungsmittel vorsieht, um von Wind erzeugte Seilschwingungen zu dämpfen.

Aus der FR-A-877 869 ist eine Freileitungsaufhängung bekannt, welche mit Dämpfungsmitteln versehen ist, die im Bereich der Leitungsaufhängung, der Traversen und/oder des Abspannmastes vorgesehen sind und mittels energieabsorbierender Mittel die von Wind verursachten, in einem Spannfeld auftretenden Schwingungen und deren Übertragung in benachbarte Spannfelder verhindern sollen.

Erfahrungen haben gezeigt, daß die vorgeschlagenen Dämpfungsanordnungen unzureichend sind.

Ausgehend hiervon ist es Aufgabe der Erfindung wenigstens eine Dämpfungsvorrichtung der eingangs genannten Art anzugeben, welche, das Problem der niederfrequenten, als "galopping" bezeichneten, Seilschwingungen von Freileitungen zu lösen geeignet ist.

Diese Aufgabe wird erfindungsgemäß durch die Merkmale des Patentanspruches 1 gelöst. Weitere Lösungen gehen aus den weiteren Ansprüchen hervor, die teilweise rückbezogen sind.

Die erfindungsgemäßen Dämpfungsvorrichtungen werden durch Federstoßdämpfer gebildet, die zwischen den Isolatorketten und Traversen oder zwischen den Traversen und dem Mast angeordnet sind. Dabei können ein oder zwei Federstoßdämpfer als Verbindungselement für die Stromschlaufe einer Hochspannungsfreileitung dienen. Hierbei ist das Verbindungselement an der Isolatorkette bzw. an den Isolatorketten befestigt, während die Hochspannungsfreileitung unmittelbar an den Federstoßdämpfern befestigt ist. Falls in den Abspannfeldern mit nicht zu extrem großen kinetischen Energien zu rechnen ist, können auch Dämpfungsvorrichtungen verwendet werden, die lediglich die Differenzkräfte absorbieren. Weitere Ausgestaltungen der Erfindung sind in den Unteransprüchen gekennzeichnet.

Die in den Ansprüchen aufgezeigten Merkmale der Erfindung werden nachfolgend anhand von schematischen Zeichnungen näher erläutert.

Es zeigen:
- Fig. 1: eine Isolatorkette, die zusätzlich über Federstoßdämpfer an der Traverse gehaltert ist
- Fig. 2: die Anordnung gemäß Fig. 1 in Richtung des Leiterseiles gesehen
- Fig. 3: eine Variante der in Fig. 1 dargestellten Anordnung,
- Fig. 4: eine weitere Ausführungsform der Anordnung nach Fig. 1,
- Fig. 5: eine Isolator-V-Schwinge mit der erfindungsgemäßen Dämpfungsvorrichtung,
- Fig. 6: eine Variante der in Fig. 5 dargestellten Anordnung,
- Fig. 7: eine weitere Ausführungsform der Anordnung gemäß Fig. 5,
- Fig. 8: die in Fig. 7 dargestellte Anordnung in Leiterseilrichtung gesehen,
- Fig. 9: ein Verbindungselement aus zwei Federstoßdämpfern, die eine Stromschlaufe überbrücken,
- Fig. 10: eine zur Dämpfung von Differenzkräften vorgesehene Vorrichtung,
- Fig. 11: einen Vertikalschnitt durch die in Fig. 14 gezeigte Dämpfungsvorrichtung senkrecht zum Verlauf des Hochspannungsfreileitungsseils,
- Fig. 12: eine Variante der in Fig. 14 dargestellten Einrichtung,
- Fig. 13: eine weitere Ausführungsform einer Dämpfungsvorrichtung gemäß Fig. 14,
- Fig. 14: eine weitere aus Laschen und Dämpferelementen ausgebildete Einrichtung,
- Fig. 15: eine vierte Variante der in Fig. 14 dargestellten Einrichtung,
- Fig. 16: einen Vertikalschnitt durch die in Fig. 19 dargestellte Einrichtung, senkrecht zur Leiterseilrichtung,
- Fig. 17: eine Dämpfungsvorrichtung, die zwischen zwei Isolatorketten aufgespannt ist,
- Fig. 18: eine Traverse, die über eine Dämpfungsvorrichtung am Anspannmast gehaltert ist,

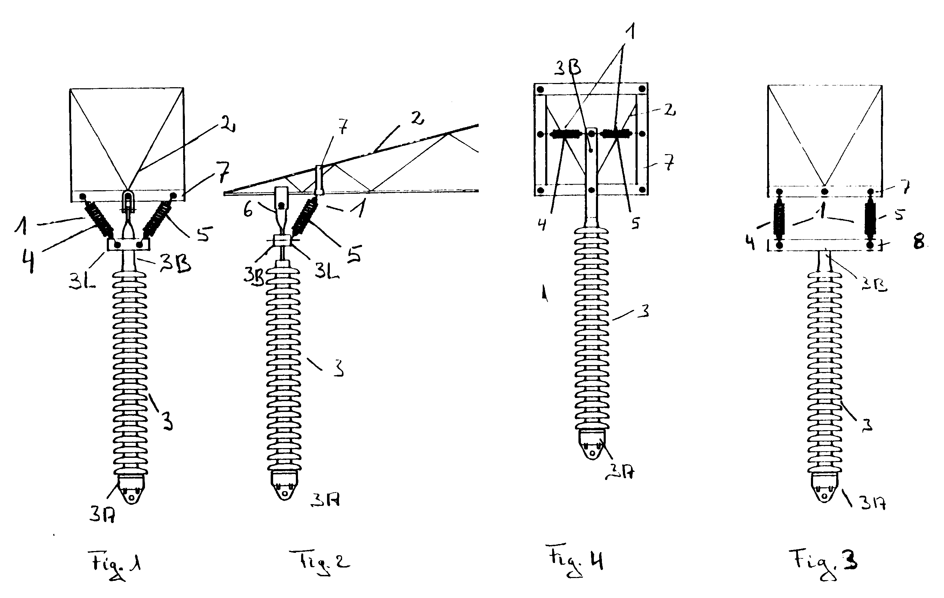

Fig. 1 zeigt eine Dämpfungsvorrichtung 1, die zwischen einer Traverse 2 und einer eingliedrigen Isolatorkette 3 angeordnet ist. Die Dämpfungsvorrichtung wird durch zwei Federstoßdämpfer 4 und 5 gebildet, die sowohl an der Traverse 2 als auch an der Isolatorkette 3 beweglich befestigt sind. Am ersten freien Ende 3A der Isolatorkette 3, das nachfolgend auch als Leiterseilaufhängung bezeichnet wird, ist die Hochspannungsfreileitung (hier nicht dargestellt) befestigt. Das zweite Ende 3B der Isolatorkette ist über ein herkömmliches Halterungselement 6 an der Traverse beweglich befestigt. Das zweite Ende 3B der Isolatorkette 3 ist mit einer Verbreiterung 3L versehen, an der je einer der Federstoßdämpfer 4 und 5 beidseitig der Längsachse der Isolatorkette 3 beweglich gehaltert ist. Die Federstoßdämpfer 4 und 5 sind mit ihren zweiten Enden an einer stegartigen Halterung 7 beweglich befestigt. Die Halterung 7 ist so angeordnet, daß ihre Längsachse senkrecht zur Längsachse der Traverse verläuft. Sollen die beiden Federstoßdämpfer 4 und 5 so geführt werden, daß sie mit der Längsachse der Isolatorkette 3 und der Längsachse der Traverse 2 einen spitzen Winkel einschließen, so wird die Halterung 7 in definiertem Abstand von dem Halteelement 6 an der Traverse 2 befestigt. Dies wird in den beiden Fig. 1 und 2 veranschaulicht, wobei Fig. 1 die Anordnung in Richtung der Längsachse der Traverse und Fig. 2 die Anordnung senkrecht zur Längsachse der Traverse 2 zeigt. Erfindungsgemäß besteht die Möglichkeit, die Dämpfungsvorrichtung 1 auch zwischen der Traverse 2 und einer mehrgliedrigen Isolatorkette (hier nicht dargestellt) anzuordnen. Durch die Dämpfungsvorrichtung werden Schwingungen sowohl in Längsrichtung als quer zur Leiterseilrichtung absorbiert. Bei der in Fig. 3 dargestellten Anordnung dient die Dämpfungsvorrichtung 1 gleichzeitig als Halterung für eine eingliedrige Isolatorkette 3. Bei Bedarf kann selbstverständlich auch eine mehrgliedrige Isolatorkette verwendet werden. An dem freien Ende der Isolatrkette 3A wird die Hochspannungsfreileitung (hier nicht dargestellt) beweglich befestigt. An dem zweiten Ende 3B der Isolatorkette 3 ist eine Lasche 8 befestigt, deren Längsachse senkrecht zur Längsachse der Isolatorkette 3 angeordnet ist. An jedem der beiden äußeren Enden dieser Lasche 8 ist eine der Federstoßdämpfer 4 und 5 beweglich gehaltert. Die zweiten Enden der Federstoßdämpfer 4 und 5 sind mit einer stegartigen Halterung 7 der Traverse 2 so verbunden, daß die beiden Längsachsen der beiden Federstoßdämpfer 4 und 5 parallel zueinander verlaufen.

Bei der in Fig. 4 dargestellten Ausführungsform ist die Dämpfungsvorrichtung 1 mit dem zweiten Ende 3B einer ein- oder mehrgliedrigen Isolatorkette 3 verbunden. Das Ende 3B der Isolatorkette 3 ist so verlängert, daß es in einen Halterahmen 7 hineinragt, der im Bereich der Traverse 2 angeordnet ist. Der rechteckige Rahmen 7 spannt eine Ebene auf, die senkrecht zur Längsachse der Traverse 2 verläuft. Das Ende 3B der Isolatorkette 3 ist mittig am untersten senkrecht zur Längsachse der Isolatorkette 3 verlaufenden Schenkel des Rahmens 7 beweglich befestigt. Am äußeren Ende 3B der Isolatorkette 3 sind die beiden Federstoßdämpfer 4 und 5 gemeinsam beweglich befestigt. Die zweiten Enden der Federstoßdämpfer 4 und 5 sind senkrecht zur Längsachse der Isolatorkette 3 geführt und dort beweglich gehaltert.

In Fig. 5 ist die Dämpfungsvorrichtung 1 so angeordnet, wie bei der Ausführungsform 4. Der Unterschied zwischen beiden Anordnungen besteht hierbei in der Verwendung einer Isolator-V-Schwinge 3, an derem freien Ende 3A die Hochspannungsfreileitung (hier nicht dargestellt) befestigt werden kann. Die beiden Isolatorketten 3C und 3D, welche die V-Schwinge 3 bilden, sind an ihren nicht zusammengefaßten Enden 3B an einer T-förmigen Halterung 8 beweglich befestigt. Vorzugsweise sind die Enden 3B in definiertem Abstand an der Lasche 8A der T-förmigen Halterung 8 befestigt, währen die hierzu senkrecht angeordnete Lasche 8B an einem an der Traverse befestigten Rahmen 7 beweglich gehaltert ist. Ebenso wie bei der Ausführungsform nach Fig. 4 spannt der Rahmen eine Ebene auf, die senkrecht zur Längsachse der Traverse 2 verläuft.

Fig. 6 zeigt eine ähnliche Anordnung wie Fig. 3. Der Unterschied besteht darin, daß nicht eine Isolatorkette, sondern eine Isolator-V-Schwinge 3 zur Halterung der Hochspannungsfreileitung vorgesehen ist. Das freie Ende der Isolator-V-Schwinge 3 dient zur Halterung der Hochspannungsfreileitung (hier nicht dargestellt). Die zweiten Enden 3B der beiden Isolatorketten 3C und 3D, welche die Isolator-V-Schwinge 3 bilden, sind an den Enden einer die Isolator-V-Schwinge aufspannenden Lasche 8 beweglich befestigt. An der Lasche 8 sind zusätzlich die ersten Enden zweier Federstoßdämpfer 4 und 5 gehaltert, welche die Dämpfungsvorrichtung 1 bilden. Die zweiten Enden der Federstoßdämpfer 4 und 5 sind beweglich an dem Schenkel eines Rahmens 7 gehaltert, der in gleicher Weise, wie der Rahmen 7 nach Fig. 5 an der Traverse 2 angeordnet ist. Die Längsachse des Schenkels verläuft senkrecht zur Längsachse der Traverse 2.

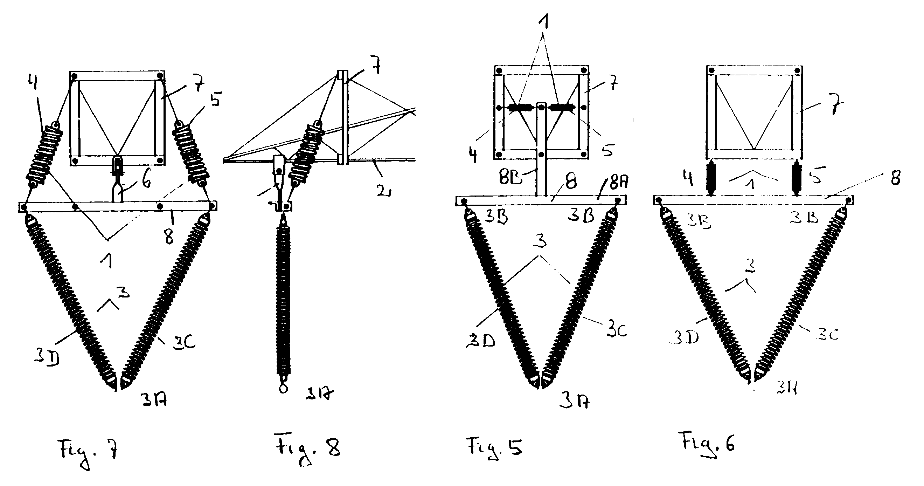

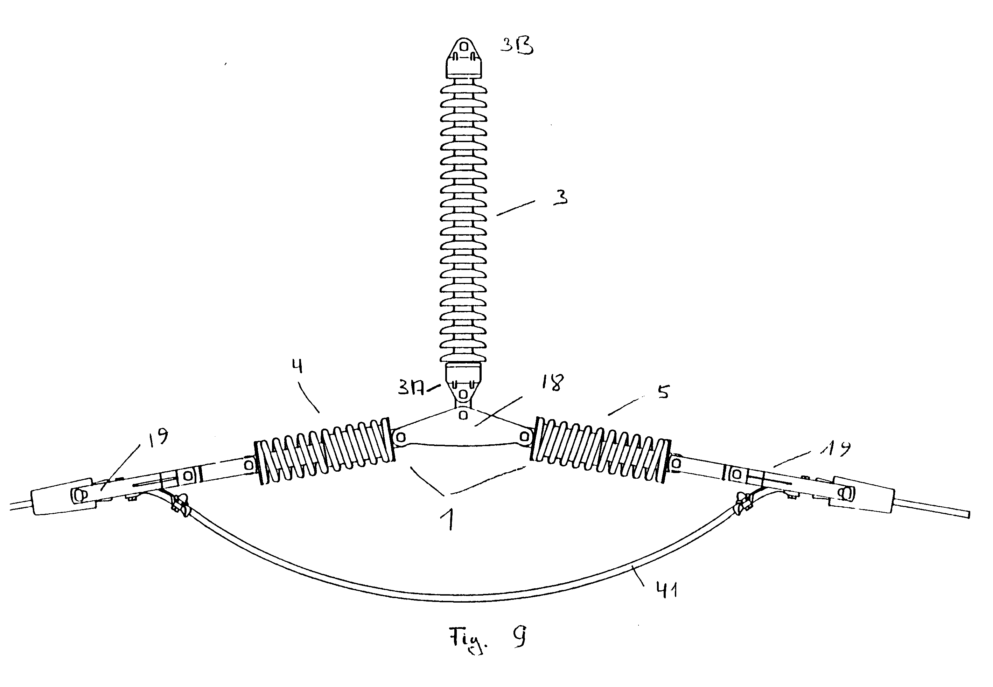

Eine weitere Ausführungsform zur Verbindung der Dämpfungsvorrichtung 1 mit einer Isolator-V-Schwinge ist in den Fig. 7 und 8 dargestellt. Das freie Ende der Isolator-V-Schwinge 3 ist wiederum zur Halterung einer Hochspannungsfreileitung (hier nicht dargestellt) vorgesehen. Die zweiten Enden der Isolatorketten 3C und 3D der Isolator-V-Schwinge 3 sind beweglich an einer Lasche 8 gehaltert, welche die Isolator-V-Schwinge 3 aufspannt. Die Lasche 8 ist mittig über ein herkömmliches Halteelement 6 an der Traverse 2 beweglich befestigt. In definiertem Abstand von dem an der Traverse 2 befestigten Halteelement 6 ist ein Rahmen 7 installiert, der in gleicher Weise wie die in den Fig. 5 und 6 dargestellten Rahmen 7 angeordnet ist. An den Enden der Lasche 8 sind neben der Isolator-V-Schwinge 4 die ersten Enden der Federstoßdämpfer 4 und 5, welche die Dämpfungsvorrichtung 1 bilden, beweglich gehaltert. Die zweiten Enden der Federstoßdämpfer 4 und 5 sind zum oberen Ende des Rahmens 7 hingeführt und dort an den äußeren Enden des zur Längsachse der Traverse senkrecht laufenden Schenkels des Rahmens 7 beweglich befestigt. Hierdurch wird erreicht, daß die beiden Federstoßdämpfer 3 und 4 der Dämpfungsvorrichtung 1 mit der Längsachse der Isolator-V-Schwinge 3 und der Längsachse der Traverse 2 einen spitzen Winkel einschließen. Es besteht auch die Möglichkeit, den Rahmen 7 so anzuordnen, daß die Längsachse des Halteelements 6 in der von dem Rahmen 7 aufgespannten Ebene liegt.

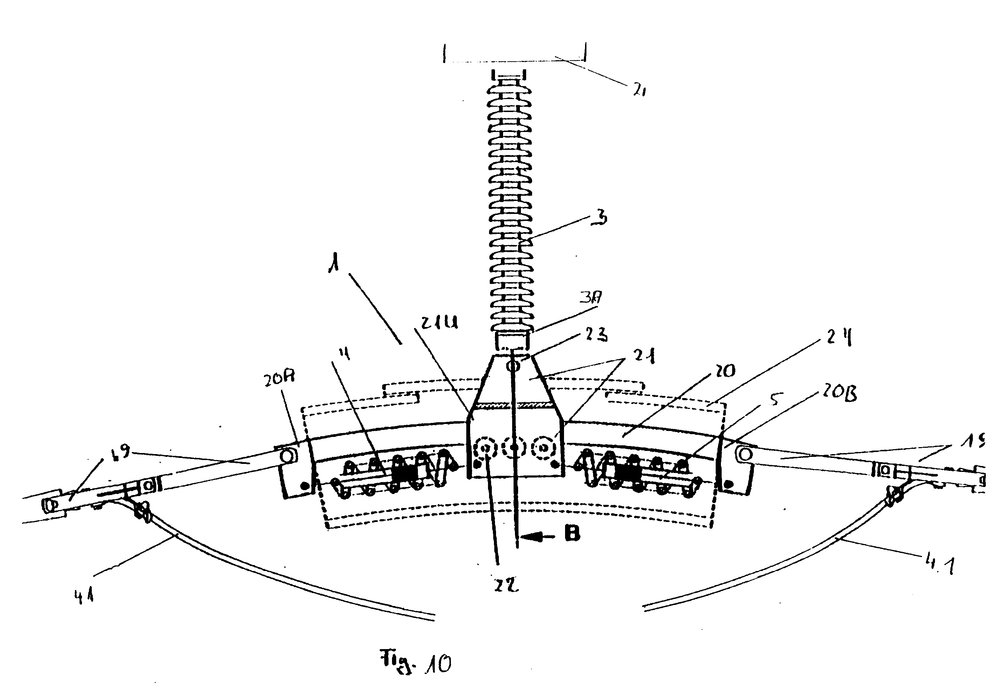

Bei der in Fig. 9 gezeigten Dämpfungsvorrichtung 1 handelt es sich um zwei Federstoßdämpfer 4 und 5, die über eine Lasche 18 beweglich miteinander verbunden sind. An der Lasche 18 ist zusätzlich das erste Ende 3A einer eingliedrigen Isolatorkette 3 gehaltert, deren zweites Ende 3B mit einer Traverse (hier nicht dargestellt) verbindbar ist. Die hier gezeigte Dämpfungsvorrichtung 2 dient gleichzeitig als Verbindungselemente für eine Stromschlaufe 41 der Hochspannungsfreileitung 40. Die Federstoßdämpfer 4 und 5 sind mit herkömmlichen Halterungselementen 19 beidseitig der Stromschlaufe 41 mit der Hochspannungsfreileitung 40 verbunden. Ebenso ist es möglich, nur einen Federstoßdämpfer zu verwenden, der dann einseitig an der Isolatorkette 3 befestigt wird, während die Hochspannungsfreileitung auf der zweiten Seite der Isolatorkette 3 über ein Halteelement 19 an dieser gehaltert ist.

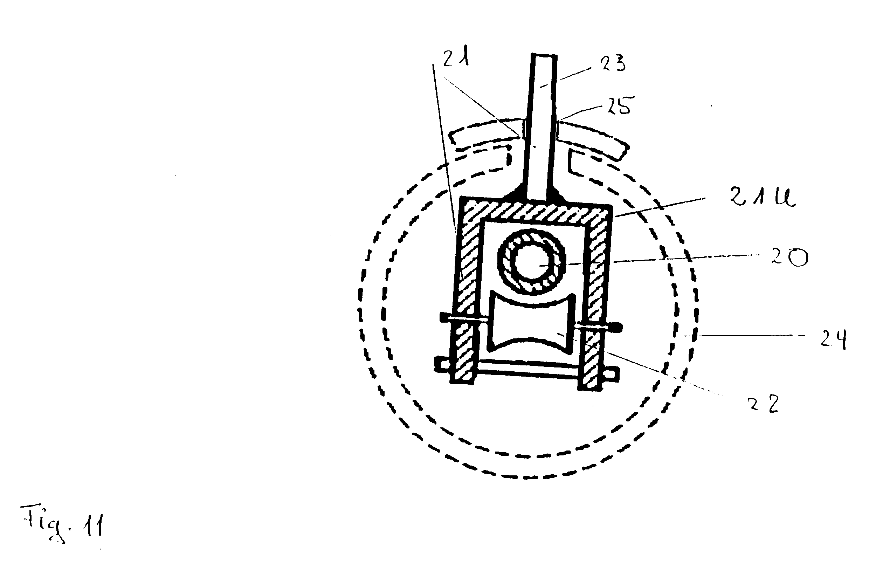

Die in Fig. 10 dargestellte Dämpfungsvorrichtung 1 ist in der Lage, die kinetische Energie, welche in einem Spannfeld auftritt, so zu absorbieren, daß keine Anregung des unmittelbar angrenzenden Spannfeldes erfolgt. Durch die Dämfpungsvorrichtung 1 wird die Schlaufe 41 eines Leiterseils 40 überbrückt. Kernstück der Dämpfungsvorrichtung 1 ist ein biegesteifes Rohr oder ein Träger. Das Rohr 20 weist eine Krümmung auf, dessen Krümmungsradius an den Ablaufwinkel der rechts und links in das Spannfeld ablaufenden Leiterseils 40 angepaßt ist. Das Rohr 20 ist so angeordnet, daß es konvex nach oben gewölbt ist. Die beiden Enden 20A und 20B des Rohres sind laschenartig verbreitert, und mittig über jeweils eine Halterung 19 mit dem ersten bzw. zweiten Ende der Stomschlaufe 41 der Leiterseils 40 verbunden. Die zweiten Enden 20A und 20B des Rohres 20 sind zusätzlich beweglich mit je einem Federstoßdämpfer 4 bzw. 5 verbunden. Die zweiten Enden der Federstoßdämpfer 4 und 5 sind beweglich mit einem Halteelement 21 verbunden und so unterhalb des Rohres 20 positioniert, daß ihre Längsachsen etwa parallel zur Längsachse des Rohres 20 verlaufen. Das Halteelement 21 weist, in Leiterseilrichtung gesehen, einen U-förmigen Querschnitt auf, wobei die Öffnung des U-förmigen Teils nach unten gerichtet ist.

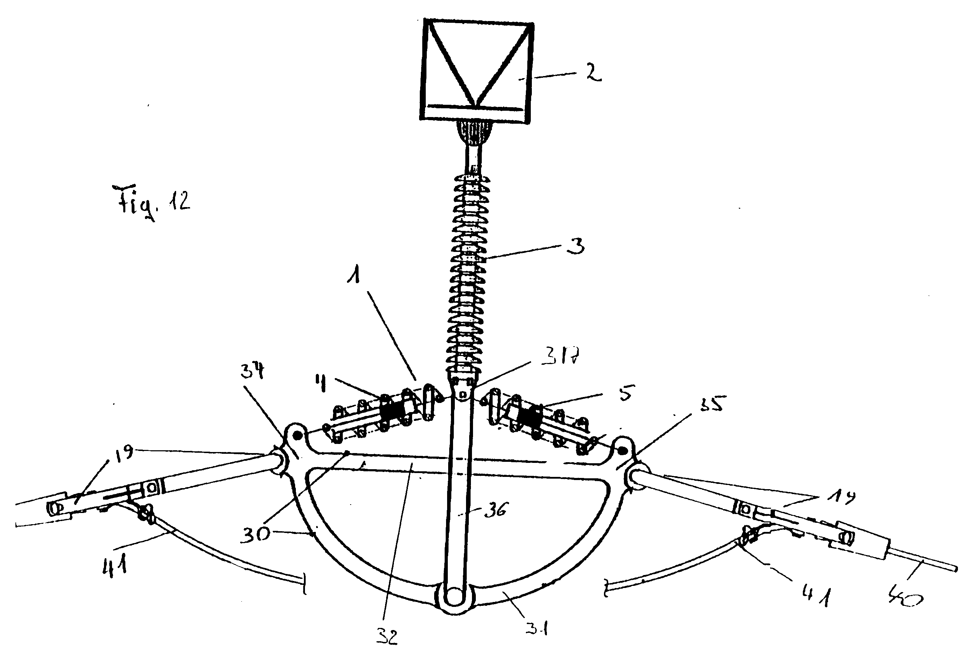

Fig. 11 zeigt einen Vertikalschnitt durch das Halteelement 21, senkrecht zur Leiterseilrichtung gesehen. Das Rohr 20 wird von dem U-förmigen Teil 21U der Haltevorrichtung 21 umschlossen. Im unteren Bereich des U-förmigen Teils 21U sind Rollen 22 angeordnet, deren Achsen zur Längsachse des Rohres 20 senkrecht verlaufen. Das U-förmige Bauteil 21U weist an seinem oberen Ende eine Lasche 23 auf, die mit einer Isolatorkette 3 beweglich verbunden ist. Die Isolatorkette 3 selbst ist an einer Traverse 2 ebenfalls beweglich gehaltert. Die Federstoßdämpfer 4 und 5 sowie das Rohr 20 und der U-förmige Teil 21U des Halteelements 21 sind von einer Hülle 24 umgeben. Das laschenförmige Element 23 ist durch einen Schlitz 25 in der Hülle 24 nach außen geführt, und dort mit der Isolatorkette 3 verbunden. Der Schlitz 25 ist nach oben weisend auf der Oberseite der Hülle 24 in derem mittleren Bereich angeordnet. Die Breite und die Länge des Schlitzes 25 sind so gewählt, daß das Halteelement über mindestens zwei Drittel der Gesamtlänge des Rohres 20 in Leiterseilrichtung hin und her bewegt werden kann. Dies geschieht dadurch, daß die Rollen 22 an der Unterseite des Rohres 20 entlangrollen.

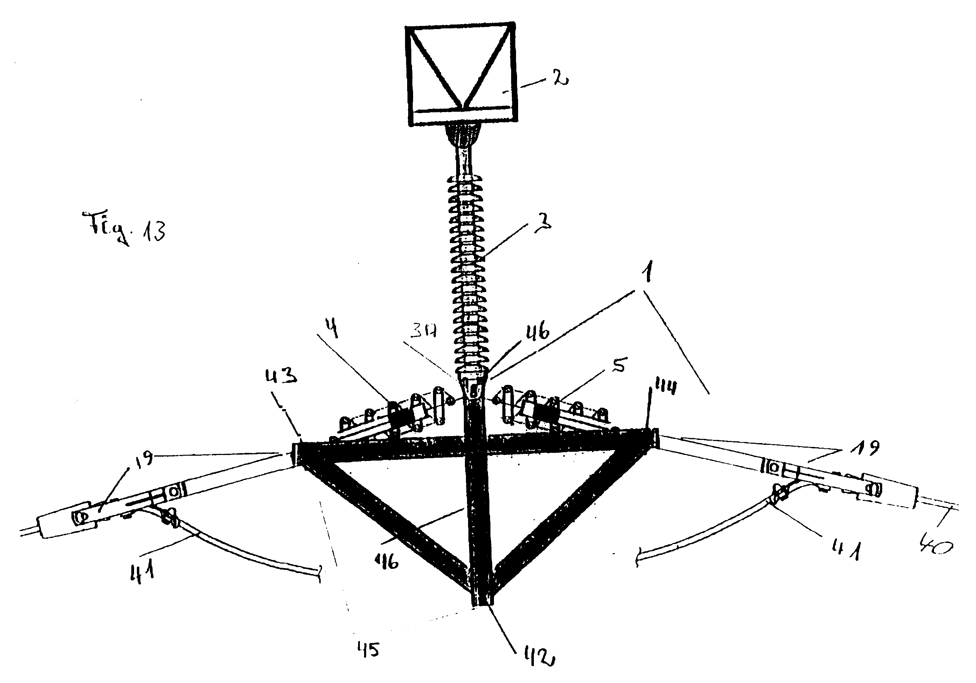

Die in Fig. 12 dargestellte Dämpfungseinrichtung 1 enthält als Kernstück ein D-förmige Bauelement 30. Die Verbindungsstellen 34 und 35 des halbkreisförmig ausgebildeten Bauteils 31 und des geradlinig ausgebildeten Bauteils 32 des Bauelements 30 sind über je eine Haltevorrichtung 19 mit je einem Ende der Schlaufe 41 des Leiterseils 40 beweglich verbunden. An den Verbindungsstellen 34 und 35 ist jeweils das erste Ende eines Federstoßdämpfers 4, 5 beweglich befestigt. Die zweiten Enden der Federstoßdämpfer 4 und 5 sind mit dem ersten Ende einer Lasche 36 verbunden. Das zweite Ende dieser Lasche ist im tiefsten Punkt des D-förmigen Bauelements 30 beweglich gehaltert. Am ersten Ende der Lasche 36 ist auch eine Isolatorkette 3 mit ihrem ersten Ende beweglich gehaltert. Das zweite Ende der Isolatorkette 3 ist beweglich an einer Traverse 2 befestigt.

Fig. 13 zeigt wiederum eine Dämpfungsvorrichtung 1, welche die Schlaufe 41 eines Leiterseils 40 überbrückt. Gebildet wird diese Dämpfungsvorrichtung durch ein gleichschenkliges Dreieck 45. Die Spitze 42 des Dreiecks 45, die einen rechten Winkel einschließt, und an der die beiden gleichlangen Schenkel zusammengefaßt sind, ist nach unten weisend angeordnet. Die beiden anderen Eckpunkte 43 und 44 des Dreiecks 45 sind über je eine Halterung 19 mit dem ersten bzw. zweiten Ende der Schlaufe 41 des Leiterseils 40 bebeweglich verbunden. An der Halterung 19 ist neben dem Dreieck 45 auch noch jeweils ein Ende eines Federstoßdämpfers 4 bzw. 5 beweglich befestigt. Die zweiten Enden der beiden Federstoßdämpfer 4 und 5 sind zum ersten Ende einer Lasche 46 geführt und dort beweglich befestigt. Das zweite Ende der Lasche 46 ist in der Spitze 42 des Dreiecks 45 beweglich gehaltert. Das erste Ende der Lasche 46 ist zusätzlich beweglich an einer Isolatorkette 3 befestigt, die ihrerseits beweglich an einer Traverse 2 gehaltert ist.

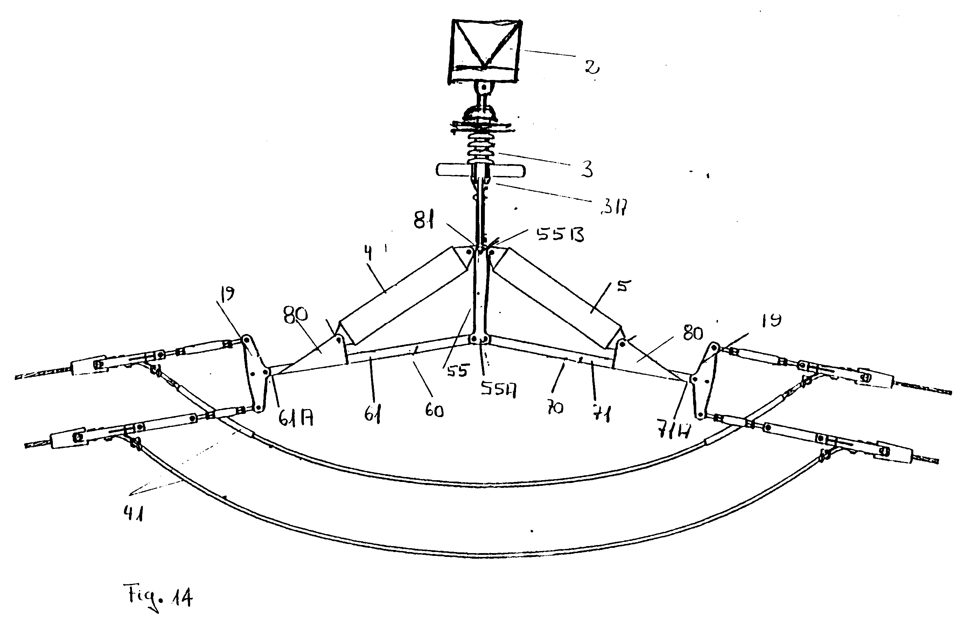

Fig. 14 zeigt eine Dämpfungsvorrichtung die im wesentlichen durch zwei spitzwinklige Dreiecke 60 und 70 gebildet wird. Diese sind zum einen über Halterungen 19 mit den Enden von Schlaufen 41, die zu Leiterseilen 40 gehören beweglich verbunden. Zum anderen sind die Dreiecke 60 und 70 an einer Isolatorkette 3 ebenfalls beweglich gehaltert. Die beiden Dreiecke 60 und 70 weisen Zugübertragungslaschen 61 und 71 auf. Die ersten Enden dieser Laschen 61 und 71 sind an den Halteelementen 19 befestigt. Die zweiten Enden dieser Zugübertragungslaschen 61 und 71 sind beweglich mit dem ersten Ende 55A einer dritten Lasche 55 verbunden, deren zweites Ende 55B beweglich am nach unten weisenden Ende der Isolatorkette 3 befestigt ist. Das zweite Ende der Isolatorkette ist beweglich an einer Traverse 2 gehaltert. Die ersten Enden 61A und 71A der Zugübertragungslaschen 61 und 71 sind beide zu je einem Halteelement 80 ausgebildet. An jedem dieser Halteelemente 80 ist das erste Ende eines Federstoßdämpfers 4 bzw 5 beweglich befestigt, während die zweiten Enden der beiden Federstoßdämpfer 4 und 5 zu dem nach unen weisenden Ende der Isolatorkette 3 geführt und dort beweglich befestigt sind. Die beiden Federstoßdämpfer 4 und 5 können alternativ auch als reine Stoßdämpfer ohne Federelemente ausgebildet werden, da das erste Ende 55A der Lasche 55, das gleichzeitig als Verbindungspunkt der drei Laschen 61, 71 und 55 dient, und wegen der Auswirkung der Schwerkraft stets in eine stabile Lage um den am unteren Ende des Isolators 3 befindlichen Drehpunkt 81 schwenkt, wenn an den Halterungen 19 der Dämpfungsvorrichtung 1 gleiche oder entgegengesetzte Kräfte angreifen.

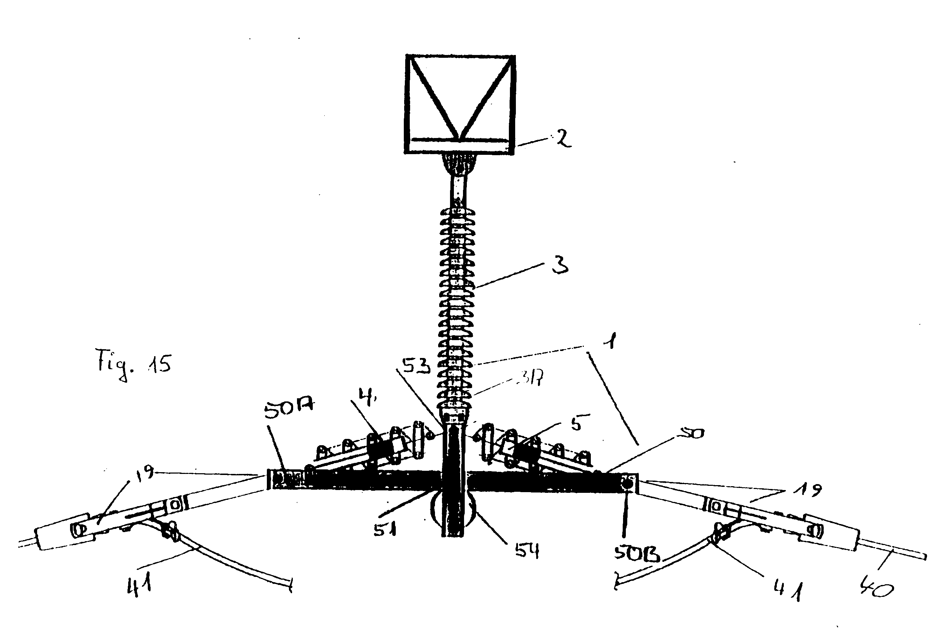

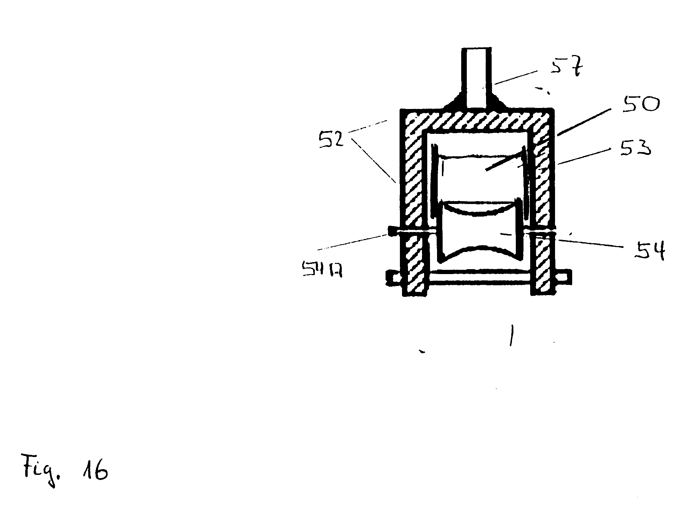

Die in Fig. 15 dargestellte Dämpfungsvorrichtung weist einen Träger 50 auf, der einen I-förmigen Querschnitt aufweist. Der Träger 50 ist mit je einem Ende mit einer Halterung 19 beweglich verbunden, die wiederum jeweils an einem Ende der Schlaufe 41 des Leiterseils 40 befestigt ist. An den ersten Enden der Halterungen 19 sind zusätzlich die ersten Enden zweier Federstoßdämpfer 4 bzw. 5 befestigt, deren zweiten Enden zum oberen Ende einer Haltevorrichtung 52 geführt und dort befestigt sind. Wie anhand von Fig. 16 zu sehen ist, weist die Haltevorrichtung 52 einen U-förmigen Querschnitt auf, wobei die Öffnung nach unten gerichtet ist. Der Träger 50 wird von dem U-förmigen Teil der Haltevorrichtung 52 umschlossen. Innerhalb des U-förmigen Rahmens 53 der Haltevorrichtung 52 ist eine Rolle 54 installiert, deren Achse 54A senkrecht zur Leiterseilrichtung verläuft. Die Rolle 54 greift an der Unterseite des Trägers 50 an, und kann entlang desselben bewegt werden. Gleichzeitig ist sie an einer Isolatorkette 3 befestigt, die ihrerseits beweglich an einer Traverse 2 gehaltert ist.

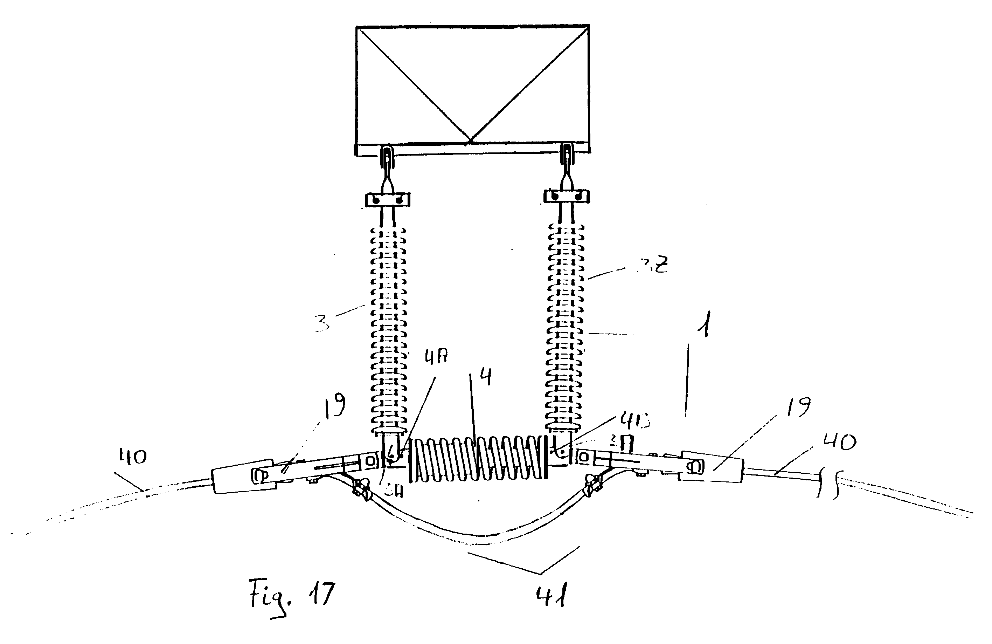

Fig. 17 zeigt eine Dämpfungsvorrichtung 1, die durch nur einen Federstoßdämpfer 4 gebildet wird. Das erste und das zweite Ende 4A und 4B des Federstoßdämpfers 4 sind mit dem ersten bzw. zweiten Ende der Schlaufe 41 eines Leiterseils 40 beweglich verbunden. Zusätzlich ist jedes dieser Enden 4A bzw. 4B an je einer Isolatorkette 3, 3Z angelenkt, die mit ihren zweiten Enden beweglich an einer Traverse 2 befestigt ist. Ferner sind die Enden 4A und 4B des Federstoßdämpfers 4 über je eine Halterung 19 mit dem Leiterseil 40 zur Bildung einer Stromschlaufe 41 verbunden.

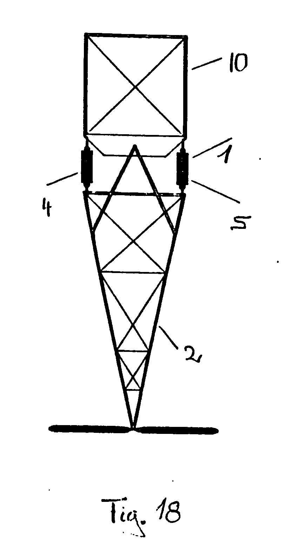

Wie anhand von Fig. 18 zu sehen ist, besteht die Möglichkeit, die Dämpfungsvorrichtung auch zwischen dem Abspannmast 10 und der Traverse 2 anzuordnen. Anstelle der herkömmlichen Befestigung der Traverse 2 am Abspannmast 10 sind zwischen diesen beiden Bauelementen in definiertem Abstand zwei Federstoßdämpfer 4 und 5 angeordnet, deren Längsachsen parallel zueinander und zur Längsachse des Abspannmastes 10 senkrecht verlaufen.

## Patentansprüche

1. Dämpfungsvorrichtung für mindestens eine Hochspannungs freileitung (40), die über Spannfelder zwischen den Traversen (2) von Abspannmasten (10) geführt und an diesen gahltert ist und für die im Bereich der Leitungsaufhängung (3A), der Traversen (2) und/oder der Abspannmaste (10) ein oder mehrere Federstoßdämpfer (4, 5) vorgesehen sind, welche die in einem angeregten Spannfeld auftretenden kinetischen Energien absorbieren und deren Übertragung in benachbarte Spannfelder verhindern, dadurch gekennzeichnet, daß zwischen dem zweiten Ende (3B) einer ein- oder mehrgliedrigen Isolatorkette (3) und der Traverse (2) zwei als Dämpfereinrichtung (1) dienende Federstoßdämpfer (4 und 5) gehaltert sind, daß die Isolatorkette (3) über ein Halteelement (6) beweglich an der Traverse (2) befestigt ist, daß die beiden Federstoßdämpfer (4 und 5) zum einen an einer Verbreiterung (3L) der Isolatorenkette gehaltert und zum anderen an einer Halterung (7) der Traverse (2) befesetigt sind, und daß die Halterung an der gleichen Stelle wie das Hatleelement (6) oder in definiertem Abstand davon an der Traverse (2) befestigt ist.

2. Dämpfungsvorrichtung mit den oberbegrifflichen Merkmalen nach Anspruch 1, dadurch gekennzeichnet, daß das zweite Ende (3B) einer Isolatorkette (3) oder einer Isolator-V-Schwinge (3) an einer Lasche (8) befestigt ist, deren Längsachse in Richtung der Hochspannungsfreileitung (40) verläuft, und daß die ersten Enden von zwei Federstoßdämpfern (4 und 5) mit der Lasche (8) verbunden sind, und daß die zweiten Enden der Federstoßdämpfer (4 und 5) an einem Rahmen (7) befestigt sind, der an der Traverse (2) gehaltert ist und eine Ebene senkrecht zur Längsachse der Traverse (2) aufspannt.

3. Dämpfungsvorrichtung mit den oberbegrifflichen Merkmalen nach Anspruch 1, dadurch gekennzeichnet, daß an der Traverse (2) ein Halterahmen (7) befestigt ist, der eine Ebene senkrecht zur Längsachse der Traverse (2) aufspannt und an dessen vertikalen Schenkeln jeweils ein Ende eines Federstoßdämpfers (4, 5) befestigt ist, daß die Federstoßdämpfer (4 und 5) horizontal geführt und ihre zweiten Enden am zweiten Ende (3B) einer Isolatorkette (3) oder am Ende eines T-förmigen Halteelements (8) befestigt sind, an dem eine Isolator-V-Schwinge (3) gehaltert ist, und daß die Isolatorkette (3) und das T-förmige Halteelement (8) zusätzlich mit dem untersten, senkrecht zur Längsachse der Traverse (2) verlaufenden Schenkel des Halterahmens (7) verbunden sind.

4. Dämpfungsvorrichtung nach Anspruch 3, dadurch gekennzeichnet, daß eine Isolator-V-Schwinge (3) über eine Lasche (8) und ein Halteelement (6) an der Traverse (2) befestigt ist, daß an der Lasche (8) die Enden von zwei Federstoßdämpfern (4 und 5) beweglich gehaltert sind, daß die zweiten Enden dieser Federstoßdämpfer (4 und 5) an dem obersten senkrecht zur Längsachse der Traverse (2) verlaufenden Schenkel des Halterahmens (7) beweglich befestigt sind, und daß der Halterahmen (7) an der gleichen Stelle oder in definiertem Abstand von dem Halteelement (6) an der Traverse (2) befestigt ist.

5. Dämpfungsvorrichtung mit den oberbegrifflichen Merkmalen nach Anspruch 1, dadurch gekennzeichnet, daß ein biegbares Bauelement (20) an seinen beiden Enden (20A und 20B) beweglich mit Halterungen (19) verbunden ist, die mit je einem Ende einer Schlaufe (41) eines Leiterseils (40) verbunden sind, daß ein entlang des Bauelements (20) bewegliches Halteelement (21) vorgesehen ist, an dem beidseitig je ein Ende eines Federstoßdämpfers (4, 5) beweglich befestigt ist, daß die zweiten Enden der Federstoßdämpfer (4 und 5) mit je einem Ende (20A, 20B) des Bauelements (20) beweglich verbunden sind, und daß Halteelement (21) über eine Lasche (23) an einer ein- oder mehrgliedrigen Isolatorkette (3) beweglich befestigt ist, die an ihrem zweiten Ende beweglich an einer Traverse (2) gehaltert ist.

6. Dämpfungsvorrichtung nach Anspruch 5, dadurch gekennzeichnet, daß das biegesteife Bauelement (20) als Rohr oder Träger ausgebildet und mit einem Krümmungsradius versehen ist, der an den Ablaufwinkel der rechts und links in das Spannfeld ablaufenden Leiterseile angepaßt ist, daß die beiden Federstoßdämpfer (4 und 5) unterhalb des Bauelements (20) ao angeordnet sind, daß ihre Längsachsen etwa parallel zur Längsachse des Bauelements (20) verlaufen, daß das Halteelement (21) ein U-förmiges Teil (21U) aufweist, von dem das Bauelement (20) umgeben ist, daß im unteren Bereich des U-förmigen Bauelementes (21U) Rollen im Abstand hintereinander angeordnet sind, derart, daß die Achsen der Rollen (25) senkrecht zur Leiterseilrichtung verlaufen und an der Unterseite des Bauelements (20) angreifen, daß das Bauelement (20), das Halteelement (21) und die Federstoßdämpfer (4 und 5) von einer Hülle (24) umgeben sind, daß an dem U-förmigen Teil (21U) mittig eine nach oben gerichtete Lasche (23) befestigt ist, die durch einen Schlitz (25) in der Hülle (24) nach außen geführt und dort beweglich mit einer ein- oder mehrgliedrigen Isolatorkette (3) verbunden ist, die wiederum beweglich an einer Traverse (2) befestigt ist.

7. Dämpfungsvorrichtung mit den oberbegrifflichen Merkmalen nach Anspruch 1, dadurch gekennzeichnet, daß ein D-förmig ausgebildetes Bauelement (30) mit dem gekrümmten Bereich nach unten weisend angeordnet, und daß die Enden des gradlinigen Teilstücks (32) mit je einer Halterung (19) verbunden ist, die ihrerseits mit je einem Ende einer Schlaufe (41) des Leiterseils (40) verbunden sind, daß im tiefsten Punkt des D-förmigen Bauelements (30) eine Lasche (36) beweglich befestigt ist, deren zweites Ende beweglich mit einer ein- oder mehrgliedrigen Isolatorkette verbunden ist, an der die zweiten Enden zweier Federstoßdämpfer (4 und 5) ebenfalls befestigt sind, und daß die ersten Enden der Federstoßdämpfer (4 und 5) an den Verlängerungen (34 und 35) des geradlinigen Teilstücks des D-förmigen Bauelements (30) befestigt sind.

8. Dämpfungsvorrichtung mit den oberbegrifflichen Merkmalen nach Anspruch 1, dadurch gekennzeichnet, daß ein aus Trägern gebildetes gleichschenkliges Dreieck (45) mit der einen rechten Winkel einschließenden Spitze (42) nach unten weisend vorgesehen ist, dessen zweiter und dritter Eckpunkt (43 und 44) über je eine Halterung (19) mit je einem Ende der Schlaufe (41) des Leiterseils (40) beweglich verbunden ist, daß in der Spitze (42) des Dreiecks (45) eine Lasche (46) beweglich gehaltert ist, die mit ihrem zweiten Ende an einer ein- oder mehrgliedrigen Isolatorkette (3) beweglich gehaltert ist, daß die ersten Enden zweier Federstoßdämpfer (4 und 5) ebenfalls an je einer Halterung (19) beweglich befestigt sind, während die zweiten Enden der Federstoßdämpfer (4 und 5) ebenfalls an je einer Halterung (19) beweglich befestigt sind, während die zweiten Enden der Federstoßämpfer (4 und 5) zum ersten Ende der Isolatorkette (3) geführt und dort beweglich befestigt sind, und daß das zweite Ende der Isolatorkette (3) beweglich an einer Traverse (2) befestigt ist.

9. Dämpfungsvorrichtung mit den oberbegrifflichen Merkmalen nach Anspruch 1, dadurch gekennzeichnet, daß ein Träger (50) mit I-förmigen Querschnitt mit je einem Ende (50A, 50B) mit einer Halterung (19) verbunden ist, die an je einem Ende der Schlaufe (41) des Leiterseils (40) befestigt ist, daß ein Halteelement (51) vorgesehen ist, das eine Rolle (54) aufweist, die entlang der Unterseite des Trägers (50) bewegbar ist, daß die ersten Enden von zwei Federstoßdämpfern (4 und 5) mit je einer der Halterungen (19) verbunden sind, während die zweiten Enden ebenso wie das nach oben gerichtete Ende des Halteelementes (51) mit einer ein- oder mehrgliedrigen Isolatorkette (3) verbunden sind, die selbst beweglich an einer Traverse (2) gehaltert ist.

10. Dämpfungsvorrichtung nach Anspruch 9, dadurch gekennzeichnet, daß das Halteelement (51) durch ein U-förmiges Bauelement (52) gebildet ist, daß der Träger (50) das U-förmige Bauelement (52) durchsetzt, daß im Bereich des Bauelements (52) unterhalb des Trägers (50) die Achse (54A) der Rolle (54) so angeordnet ist, daß die Rolle (54) an der Unterseite des Trägers (50) abrollbar ist, und daß das Halteelement (51) eine nach oben weisende Lasche (53) aufweist, die mit einer Isolatorkette (3) verbindbar ist.

11. Dämpfungsvorrichtung mit den oberbegrifflichen Merkmalen nach Anspruch 1, dadurch gekennzeichnet, daß zwei spitzwinklige Dreiecke (60 und 70), die über eine gemeinsame Seitenbegrenzung (55) verfügen, zum einen beweglich an dem nach unten weisenden Ende (3B) einer Isolatorkette (3) gehaltert sind, während die an die spitzen Winkel angrenzenden Eckpunkte (61A und 71A) über je eine Halterung (19) mit den Enden von Schlaufen (41), die durch Leiterseile (40) gebildet werden, beweglich verbunden sind, daß jedes Dreieck (60, 70) eine Zugübertragungslasche (61, 71) aufweist, die mit ihren ersten Enden (61A und 71A) mit je einer Halterung (19) beweglich verbunden sind, während die zweiten Enden der Zugübertragungslaschen (61 und 71) mit dem ersten Ende (55A) einer weiteren Lasche (55) beweglich verbunden sind, deren zweites Ende (55B) beweglich am unteren Ende (3A) der Isolatorkette (3) gehaltert ist, daß an den ersten Enden (61A und 71A) der beiden Zugübertragungslaschen (61 und 71) Halteelemente (80) befestigt sind, an denen je ein Federstoßdämpfer (4, 5) beweglich befestigt ist, während die zweiten Enden der beiden Federstoßdämpfer (4 und 5) an dem nach unten weisenden Ende (3A) der Isolatorkette (3) ebenfalls beweglich befestigt sind, so daß hier ein Drehpunkt (81) für die Dämpfungsvorrichtung (1) ausgebildet ist.

12. Dämpfungsvorrichtung mit den oberbegrifflichen Merkmalen nach Anspruch 1, dadurch gekennzeichnet, daß jedes Ende (4A, 4B) eines Federstoßdämpfers (4) am ersten Ende einer Isolatorkette (3) beweglich gehaltert und das Leiterseil (40) zur Bildung einer Stromschlaufe (41) über je eine Halterung (19) mit je einem Ende (4A, 4B) des Federstoßdämpfers (4) ebenfalls beweglich verbunden ist.

13. Dämpfungsvorrichtung mit den oberbegrifflichen Merkmalen nach Anspruch 1, dadurch gekennzeichnet, daß jede Traverse (2) mittels zwei Federstoßdämpfern (4, 5) gehaltert ist, die am Abspannmast (10) befestigt sind.

## Claims

1. Damping device for at least one high-voltage overhead line (40) which is guided via spans between the cross-arms (2) of terminal towers (10) and is held on the latter, and for which there are provided in the region of the line suspension (3A), the cross-arms (2) and/or the terminal tower (10) one or more spring shock absorbers (4, 5) which absorb the kinetic energies occurring in an excited span and prevent said energies from being transmitted into neighbouring spans, characterized in that two spring shock absorbers (4 and 5) serving as damping device (1) are held between the second end (3B) of a one-part or multipart insulator string (3) and the cross-arm (2), in that the insulator string (3) is movably fastened to the cross-arm (2) via a holding element (6), in that the two spring shock absorbers (4 and 5) are on the one hand held on a widened part (3L) of the insulator string and on the other hand fastened to a holder (7) of the cross-arm (2), and in that the holder is fastened to the cross-arm (2) at the same point as the holding element (7) or a defined distance therefrom.

2. Damping device having the features according to the preamble of Claim 1, characterized in that the second end (3B) of an insulator string (3) or of an insulator V-shaped swinging bracket (3) is fastened to a fish-plate (8) whose longitudinal axis extends in the direction of the high-voltage overhead line (40), and in that the first ends of two spring shock absorbers (4 and 5) are connected to the fish-plate (8), and in that the second ends of the spring shock absorbers (4 and 5) are fastened to a frame (7) which is held on the cross-arm (2) and defines a plane at right angles to the longitudinal axis of the cross-arm (2).

3. Damping device having the features according to the preamble of Claim 1, characterized in that fastened to the cross-arm (2) is a holding frame (7) which defines a plane at right angles to the longitudinal axis of the cross-arm (2) and to whose vertical limbs one end of a spring shock absorber (4, 5) is fastened in each case, in that the spring shock absorbers (4 and 5) are guided horizontally and their second ends are fastened to the second end (3B) of an insulator string (3) or to the end of a T-shaped holding element (8) on which an insulator V-shaped swinging bracket (3) is held, and in that the insulator string (3) and the T-shaped holding element (8) are additionally connected to the lowermost limb of the holding frame (7) extending at right angles to the longitudinal axis of the cross-arm (2).

4. Damping device according to Claim 3, characterized in that an insulator V-shaped swinging bracket (3) is fastened to the cross-arm (2) via a fish-plate (8) and a holding element (6), in that the ends of two spring shock absorbers (4 and 5) are movably held on the fish-plate (8), in that the second ends of these spring shock absorbers (4 and 5) are movably fastened to the uppermost limb of the holding frame (7) extending at right angles to the longitudinal axis of the cross-arm (2) and in that the holding frame (7) is fastened to the cross-arm (2) at the same point or at a defined distance from the holding element (6).

5. Damping device having the features in the preamble of Claim 1, characterized in that a bendable [sic] structural element (20) is movably connected at both its ends (20A and 20B) to holders (19) which are connected to one end each of a jumper (41) of an overhead conductor (40), in that provision is made of a holding element (21) which can move along the structural element (20) and to which on either side one end each of a spring shock absorber (4, 5) is movably fastened, in that the second ends of the spring shock absorbers (4 and 5) are movably connected to one end (20A, 20B) each of the structural element (20) and in that the holding element (21) is movably fastened via a fish-plate (23) to a one-part or multipart insulator string (3) which is held movably at its second end on a cross-arm (2).

6. Damping device according to Claim 5, characterized in that the rigid structural element (20) is designed as a tube or girder and provided with a radius of curvature which is matched to the departure angle of the overhead conductor departing to the right and to the left into the span, in that the two spring shock absorbers (4 and 5) are arranged below the structural element (20) such that their longitudinal axes extend approximately parallel to the longitudinal axis of the structural element (20), in that the holding element (21) has a U-shaped part (21U) by which the structural element (20) is surrounded, in that in the lower region of the U-shaped structural element (21U) rollers are arranged at a distance one behind another in such a way that the axes of the rollers (25) extend at right angles to the overhead conductor direction and act on the underside of the structural element (20), in that the structural element (20), the holding element (21) and the spring shock absorbers (4 and 5) are surrounded by a jacket (24), and in that there is fastened in the middle to the U-shaped part (21U) an upwardly directed fish-plate (23) which is guided to the outside through a slot (25) in the jacket (24) and movably connected there to a one-part or multipart insulator string (3) which, in turn, is fastened movably to a cross-arm (2).

7. Damping device having the features in the preamble of Claim 1, characterized in that a structural element (30) of D-shaped design [lacuna] arranged with the curved region pointing downwards, and in that the ends of the rectilinear segment (32) is [sic] respectively connected to a holder [19] which, for its part, is connected to one end each of a jumper (41) of the overhead conductor (40), in that there is movably fastened at the lowest point of the D-shaped structural element (30) a fish-plate (36) whose second end is movably connected to a one-part or multipart insulator string to which the second ends of two spring shock absorbers (4 and 5) are likewise fastened, and in that the first ends of the spring shock absorbers (4 and 5) are fastened to the extensions (34 and 35) of the rectilinear segment of the D-shaped structural element (30).

8. Damping device having the features in the preamble of Claim 1, characterized in that an isosceles triangle (45) formed from girders is provided with the apex (42), enclosing a right angle, pointing downwards, the second and third corners (43 and 44) of which triangle are movably connected via respectively one holder (13) to in each case one end of the jumper (41) of the overhead conductor (40), in that there is movably held at the apex (42) of the triangle (45) a fish-plate (46) which is movably held with its second end on a one-part or multipart insulator string (3), in that the first ends of two spring shock absorbers (4 and 5) are likewise movably fastened to one holder (19) each, while the second ends of the spring shock absorbers (4 and 5) are likewise movably fastened to one holder (19) each while the second ends of the spring shock absorbers (4 and 5) are guided to the first end of the insulator string (3) and movably fastened there, and in that the second end of the insulator string (3) is fastened movably to a cross-arm (2).

9. Damping device having the features in the preamble of Claim 1, characterized in that a girder (50) having an I-shaped cross-section is connected with one end (50A, 50B) each to a holder (19) which is fastened to one end each of the jumper (41) of the overhead conductor (40), in that a holding element (51) is provided which has a roller (54) which can move along the underside of the girder (50), and in that the first ends of two spring shock absorbers (4 and 5) are connected to one each of the holders (19) while the second ends are, like the upwardly directed end of the holding element (51), connected to a one-part or multipart insulator string (3) which itself is held movably on a cross-arm (2).

10. Damping device according to Claim 9, characterized in that the holding element (51) is formed by a U-shaped structural element (52), in that the girder (50) penetrates the U-shaped structural element (52), in that in the region of the structural element (52) the axis (54A) of the roller (54) is arranged below the girder (50) such that the roller (54) can roll on the underside of the girder (50), and in that the holding element (51) has an upwardly pointing fish-plate (53) which can be connected to an insulator string (3).

11. Damping device having the features in the preamble of Claim 1, characterized in that two acute-angled triangles (60 and 70) which have a common delimiting side (55) are, on the one hand, held movably on the downwardly pointing end (3B) of an insulator string (3) while the corners (61A and 71A) adjoining the acute angles are movably connected via one holder (19) each to the ends of jumpers (41) which are formed by overhead conductors (40), in that each triangle (60, 70) has a tension-transmitting fish-plate (61, 71) which are movably connected with their first ends (61A and 71A) to one holder (19) each while the second ends of the tension-transmitting fish-plates (61 and 71) are movably connected to the first end (55A) of a further fish-plate (55) whose second end (55B) is held movably on the lower end (3A) of the insulator string (3), and in that there are movably fastened to the first ends (61A and 71A) of the two tension-transmitting fish-plates (61 and 71) holding elements (80) to which one spring shock absorber (4, 5) each is movably fastened while the second ends of the two spring shock absorbers (4 and 5) are likewise movably fastened to the downwardly pointing end (3A) of the insulator string (3), with the result that a fulcrum (81) is constructed here for the damping device (1).

12. Damping device having the features in the preamble of Claim 1, characterized in that each end (4A, 4B) of one spring shock absorber (4) is movably held on the first end of an insulator string (3), and in order to form a jumper (41) the overhead conductor (40) is likewise movably connected to one end (4A, 4B) each of the spring shock absorber (4) via one holder (19) each.

13. Damping device having the features in the preamble of Claim 1, characterized in that each cross-arm (2) is held by means of two spring shock absorbers (4, 5) which are fastened to the terminal tower (10).

## Revendications

1. Dispositif d'amortisseur pour au moins une ligne (40) aérienne à haute tension qui s'étend sur une portée entre les traverses (2) de pylônes (10) et est fixée auxdites traverses et pour laquelle il est prévu dans la région de la suspension (3A) de la ligne, dans la région des traverses et/ou dans la région des pylônes (10), un ou plusieurs amortisseurs (4, 5) à ressorts qui absorbent les énergies cinétiques apparaissant dans une portée lorsque celle-ci est excitée et empêchent ainsi leur transmissions aux portées voisines, caractérisé par le fait que deux amortisseurs (4 et 5) à ressorts servant de dispositif d'amortisseur (1) sont disposés entre la seconde extrémité (3B) d'une chaîne d'isolateurs (3) à un ou plusieurs éléments et la traverse (2), par le fait que la chaîne d'isolateurs (3) est fixée de façon mobile sur la traverse (2) par l'intermédiaire d'un élément de suspension (6), par le fait que les deux amortisseurs (4 et 5) à ressorts sont fixés d'un côté à une partie élargie (3L) de la chaîne d'isolateurs et de l'autre à une attache (7) de la traverse (2) et par le fait que l'attache est fixée sur la traverse (2) au même point que l'élément de suspension (6) ou à une distance définie de ce dernier.

2. Dispositif d'amortisseur présentant les caractéristiques selon le préambule de la revendication 1, caractérisé par le fait que la seconde extrémité (3B) d'une chaîne d'isolateurs (3) ou d'une suspension oscillante (3) formée d'isolateurs disposés en V est fixée à une patte (8) dont l'axe longitudinal s'étend dans la direction de la ligne aérienne (40) à haute tension, par le fait que les premières extrémités de deux amortisseurs (4 et 5) à ressorts sont reliées à la patte (8) et que les secondes extrémités desdits amortisseurs (4 et 5) à ressorts sont fixées à un cadre (7) qui est lié à la traverse (2) et définit un plan perpendiculaire à l'axe longitudinal de ladite traverse (2).

3. Dispositif d'amortisseur présentant les caractéristiques selon le préambule de la revendication 1, caractérisé par le fait qu'un cadre de suspension (7) est fixé sur la traverse (2), cadre qui définit un plan perpendiculaire à l'axe longitudinal de la traverse (2) et sur les montants verticaux duquel est fixée chaque fois une extrémité d'un amortisseur (4 et 5) à ressorts, par le fait que les amortisseurs à ressort (4 et 5) s'étendent horizontalement et ont leurs secondes extrémités fixées à la seconde extrémité (3B) d'une chaîne d'isolateurs (3) ou à l'extrémité d'un élément de suspension (8) en forme de T auquel est reliée une suspension oscillante (3) formée d'isolateurs disposés en V et par le fait que la chaîne d'isolateurs (3) et l'élément de suspension (8) en forme de T sont liés en outre au bras inférieur du cadre de suspension (7) qui s'étend perpendiculairement à l'axe longitudinal de la traverse (2).

4. Dispositif d'amortisseur selon la revendication 3, caractérisé par le fait qu'une suspension oscillante (3) formée d'isolateurs disposés en V est fixée sur la traverse (2) par l'intermédiaire d'une patte (8) et d'un élément de suspension (6), par le fait que les extrémités de deux amortisseurs (4 et 5) à ressorts sont fixées de façon mobile à la patte (8), par le fait que les secondes extrémités desdits amortisseurs (4 et 5) à ressorts sont fixées de façon mobile à l'aile supérieure du cadre de suspension (7) qui s'étend perpendiculairement à l'axe longitudinal de la traverse (2) et par le fait que le cadre de suspension (7) est fixé à la traverse (2) au même point ou à une distance définie de l'élément de suspension (6).

5. Dispositif d'amortisseur présentant les caractéristiques selon le préambule de la revendication 1, caractérisé par le fait qu'un élément (20) rigide en flexion est lié en ses deux extrémités (20A et 20B) de façon mobile à des moyens d'attache (19) qui sont liés chacun à une extrémité d'une boucle (41) d'un câble conducteur (40), par le fait qu'il est prévu un élément de suspension (21) mobile long de l'élément (20) de part et d'autre duquel une extrémité d'un amortisseur (4, 5) à ressorts est fixée de façon mobile, par le fait que les secondes extrémités des amortisseurs (4 et 5) à ressorts sont fixées de façon mobile chacune à une extrémité (20A, 20B) de l'élément (20) et par le fait que l'élément de suspension (21) est fixé de façon mobile par l'intermédiaire d'une patte (23) à une chaîne d'isolateurs (3) à un ou à plusieurs éléments qui, par sa seconde extrémité, est fixée de façon mobile à une traverse (2).

6. Dispositif d'amortisseur selon la revendication 5, caractérisé par le fait que l'élément (20) rigide en flexion est agencé sous forme de tube ou de poutre et présente un rayon de courbure adapté à l'angle des câbles conducteurs en début de portée à gauche et à droite, par le fait que les deux amortisseurs (4 et 5) à ressorts sont disposés en-dessous de l'élément (20) de manière telle que leurs axes longitudinaux soient sensiblement parallèles à l'axe longitudinal de l'élément (20), par le fait que l'élément (20) présente une pièce (21U) à profil en U qui entoure ledit élément (20), par le fait que des galets (25) sont disposés les uns à la suite des autres, à distance les uns des autres, dans la région inférieure de la pièce (20U) à profil en U de manière telle que les axes des galets (25) soient perpendiculaires à la direction du câble conducteur et agissent sur la face inférieure de l'élément (20), par le fait que l'élément (20), l'élément de suspension (21) et les amortisseurs (4 et 5) à ressorts sont entourés d'une enveloppe (24), par le fait qu'une patte (23) orientée vers le haut est fixée au milieu de la pièce (21U) à profil en U, laquelle patte est amenée à l'extérieur au travers d'une fente (25) dans l'enveloppe (24) et est liée à ce niveau de façon mobile à une chaîne d'isolateurs (3) à un ou à plusieurs éléments qui à son tour est fixée de façon mobile à une traverse (2).

7. Dispositif d'amortisseur présentant les caractéristiques selon le préambule de la revendication 1, caractérisé par le fait qu'un élément (30) en forme de D est disposé de manière telle que sa partie courbe soit orientée vers le bas, par le fait que les extrémités de la partie rectiligne (32) sont liées chacune à un moyen d'attache (19) qui à son tour est lié à une extrémité d'une boucle (41) du câble conducteur (40), par le fait qu'une patte (36) est fixée de façon mobile au point le plus bas de l'élément (30) en forme de D, patte dont la seconde extrémité est liée de façon mobile à une chaîne d'isolateurs à un ou plusieurs éléments à laquelle sont également fixées les secondes extrémités de deux amortisseurs (4 et 5) à ressorts et par le fait que les premières extrémités des amortisseurs (4 et 5) à ressorts sont fixées sur les prolongements (34 et 35) de la partie rectiligne de l'élément (30) en forme de D.

8. Dispositif d'amortisseur présentant les caractéristiques selon le préambule de la revendication 1, caractérisé par le fait qu'il est prévu un triangle isocèle (45) formé de poutres dont l'un des sommets (42) qui forme un angle droit est dirigé vers le bas et dont les deuxième et troisième sommets (43 et 44) sont reliés de façon mobile par l'intermédiaire d'un moyen d'attache (19) chacun à une extrémité de la boucle (41) du câble conducteur (40), par le fait qu'une patte (46) est liée de façon mobile à la pointe (42) du triangle (45), laquelle patte est fixée de façon mobile par sa seconde extrémité à une chaîne d'isolateurs (3) à un ou plusieurs éléments, par le fait que les premières extrémités de deux amortisseurs (4 et 5) à ressorts sont également liées de façon mobile chacune à un moyen d'attache (19) tandis que les secondes extrémités des amortisseurs (4 et 5) à ressorts sont amenées et liées de façon mobile à la première extrémité de la chaîne d'isolateurs (3) et par le fait que la seconde extrémité de la chaîne d'isolateurs (3) est fixée de façon mobile à une traverse (2).

9. Dispositif d'amortisseur présentant les caractéristiques selon le préambule de la revendication 1, caractérisé par le fait qu'une poutre (50) à section en I est liée à chacune de ses extrémités (50A, 50B) à un moyen d'attache (19) qui est fixé à une des extrémités de la boucle (41) de câble conducteur (40), par le fait qu'il est prévu un moyen de suspension (51) qui comprend un galet (54) mobile le long de la face inférieure de la poutre (50), par le fait que les premières extrémités de deux amortisseurs (4 et 5) à ressorts sont liées chacune à un des moyens d'attache (19) tandis que leurs secondes extrémités ainsi que l'extrémité dirigée vers le haut de l'élément de suspension (51) sont liées à une chaîne d'isolateurs (3) à un ou plusieurs éléments qui elle même est fixée de façon mobile à une traverse (2).

10. Dispositif d'amortisseur selon la revendication 9, caractérisé par le fait que l'élément de suspension (51) est constitué par un élément (52) en forme de U, par le fait que la poutre (50) traverse l'élément (52) en forme de U, que l'axe (54A) du galet (54) est disposé dans la région de l'élément (52) en-dessous de la poutre (50) de manière telle que le galet (54) roule sur la face inférieure de ladite poutre (50) et par le fait que l'élément de suspension (51) comporte une patte (53) orientée vers le haut qui est liée à une chaîne d'isolateurs (3).

11. Dispositif d'amortisseur présentant les caractéristiques selon le préambule de la revendication 1, caractérisé par le fait que deux triangles (60 et 70) acutangles qui ont un côté commun sont fixés de façon mobile à l'extrémité (3B) orientée vers le bas d'une chaîne d'isolateurs (3) tandis que les points (61A et 71A) contigus aux angles aigus sont liés de façon mobile par l'intermédiaire chacun d'un moyen d'attache (19) aux extrémités de boucles (41) formées par les câbles conducteurs (40), par le fait que chaque triangle (60,70) comporte une patte (61,71) de transfert d'effort de traction dont une première extrémité (61A, 71A) est liée à un moyen d'attache (19) tandis que la seconde extrémité de la patte (61, 71) de transfert d'effort de traction est liée de façon mobile à la première extrémité (55A) d'une patte (55) supplémentaire dont la seconde extrémité (55B) est fixée de façon mobile à l'extrémité inférieure (3A) de la chaîne d'isolateurs (3), par le fait que des éléments de fixation (80) sont fixés aux premières extrémités (61A, 71A) des deux pattes (61, 71) de transfert d'effort de traction, éléments auxquels sont fixés de façon mobile chaque fois un amortisseur (4, 5) à ressorts, tandis que les secondes extrémités des deux amortisseurs (4, 5) à ressorts sont fixées également de façon mobile à l'extrémité (3A) orientée vers le bas de la chaîne d'isolateurs (3) de manière à former un point d'articulation (81) pour le dispositif d'amortisseur (1).

12. Dispositif d'amortisseur présentant les caractéristiques selon le préambule de la revendication 1, caractérisé par le fait que chaque extrémité (4A, 4B) d'un amortisseur (4) à ressorts est fixée de façon mobile à la première extrémité d'une chaîne d'isolateurs (3) et que, aux fins de former une boucle (41), le câble conducteur (40) est fixé également de façon mobile par l'intermédiaire d'un moyen d'attache (19) à une extrémité (4A, 4B) de l'amortisseur (4) à ressorts.

13. Dispositif amortisseur présentant les caractéristiques selon le préambule de la revendication 1, caractérisé par le fait que chaque traverse (2) est tenue par deux amortisseurs (4, 5) à ressorts qui sont fixés au pylône (10).
